(19) Europäisches Patentamt
European Patent Office
Office européen des brevets

(11) Publication number: **0 110 371**
**B1**

(12) **EUROPEAN PATENT SPECIFICATION**

(45) Date of publication of patent specification: **05.03.86**

(51) Int. Cl.$^4$: **C 08 L 83/04,** C 08 K 3/04, H 01 B 1/04, H 01 B 1/24

(21) Application number: **83111918.5**

(22) Date of filing: **29.11.83**

(54) **One-component electrically conductive organopolysiloxane compositions.**

(30) Priority: **29.11.82 US 445303**

(43) Date of publication of application:
**13.06.84 Bulletin 84/24**

(45) Publication of the grant of the patent:
**05.03.86 Bulletin 86/10**

(84) Designated Contracting States:
**AT BE DE FR GB IT NL**

(56) References cited:
**EP-A-0 005 455**
**DE-A-2 701 993**
**FR-A-2 450 856**

(73) Proprietor: **SWS Silicones Corporation**
**Adrian/Michigan 49221 (US)**

(72) Inventor: **Shen, Ming**
**1145 Towbin Avenue**
**Lakewood New Jersey 08701 (US)**

(74) Representative: **Wagner, Helga, Dr. et al**
**c/o Wacker-Chemie GmbH Prinzregentenstrasse 22**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 110 371 B1

**Description**

The present invention relates to an electrically conductive composition, more particularly to one-component electrically conductive organopolysiloxane compositions and to a method for preparing the same.

Background of the invention

Electrically conductive organopolysiloxane compositions are described in U.S. Patent No. 4,273,697 to Sumimura et al in which the composition contains (A) 100 parts of a curable liquid organopolysiloxane, (B) from 0.1 to 70 parts by weight of carbon black having a specific surface area of at least 900 $m^2/g$, (C) from 0 to 50 parts by weight of a hydroxyl endblocked polydiorganosiloxane whose degree of polymerization is 50 or less, and (D) a crosslinking agent for the curable organopolysiloxane.

Also, U.S. Patent No. 4,250,075 to Monroe et al discloses electrically conductive compositions containing (A) vinyldiorganosiloxy endblocked polydiorganosiloxanes, (B) carbonaceous particles having an average diameter of less than 20 micrometers, (C) a polyorganohydrogensiloxane having an average of at least 2.1 silicon-bonded hydrogen atoms per molecule, (D) a platinum containing catalyst, and (E) a platinum catalyst inhibitor, in which at least 2 percent by weight of phenyl radicals are present based on the weight of the cured composition.

In contrast to the compositions described in these patents, the compositions of this invention exhibit improved electrical conductivity, i.e., the compositions of this invention have an electrical resistivity of less than 2 ohm-cm, whereas the electrical resistivity of the compositions described in U.S. Patent No. 4,273,697 have an electrical resistivity of from 6 to 55 ohm-cm.

Although one-component organopolysiloxane compositions containing (1) organopolysiloxanes having silicon-bonded aliphatic unsaturation, (2) organopolysiloxanes having silicon-bonded hydrogen atoms and (3) platinum group metals are known in the art, these compositions contain an inhibitor which retards or inhibits the addition of the silicon-bonded hydrogen atoms to the silicon-bonded aliphatically unsaturated groups at room temperature.

Various types of inhibitors which may be incorporated in platinum catalyzed organopolysiloxane compositions to inhibit the addition of the silicon-bonded hydrogen atoms to the silicon-bonded aliphatically unsaturated groups are described in, for example, U.S. Patent No. 3,192,181 to Moore; U.S. Patent No. 3,344,111 to Chalk; U.S. Patent No. 3,445,420 to Kookootsedes et al; U.S. Patent No. 3,383,356 to Nielsen; U.S. Patent No. 3,882,083 to Berger et al and U.S. Patent No. 3,992,355 to Itoh et al.

One of the disadvantages of incorporating inhibitors in an organopolysiloxane composition in order to obtain shelf stability is that often times the inhibitors will evaporate from the composition. The composition will then begin to cure unpredictably while in storage. Also, some of the inhibitors may change over a period of time and are not effective in inhibiting the addition of the silicon-bonded hydrogen atoms to the silicon-bonded aliphatically unsaturated groups. Thus, it is preferred that the electrically conductive organopolysiloxane composition be free of inhibitors, but still have an indefinite shelf-life.

Therefore, it is an object of the present invention to provide a one-component electrically conductive organopolysiloxane composition. Another object of the present invention is to provide a one-component electrically conductive organopolysiloxane composition having an indefinite shelf-life. Still another object of the present invention is to provide a one-component electrically conductive composition which is free of inhibitors. A further object of the present invention is to provide an electrically conductive elastomer. A still further object of the present invention is to provide an electrically conductive organopolysiloxane elastomer which has an electrical resistance of less than 2 ohm-cm. Still a further object of the present invention is to provide a process for preparing one-component electrically conductive organopolysiloxane compositions which have an indefinite shelf-life.

Summary of the invention

The foregoing objects and others which will become apparent from the following description are accomplished in accordance with this invention, generally speaking, by providing a one-component electrically conductive organopolysiloxane composition containing (1) an organopolysiloxane having silicon-bonded aliphatic unsaturation, (2) an organosilicon compound having silicon-bonded hydrogen atoms, (3) from 40 to 65 percent by weight, based on the weight of the organopolysiloxane (1) of an electrically conductive carbon black consisting of a mixture of (a) furnace black having a surface area of from 40 to 1500 $m^2/g$ in an amount of from 20 to 50 percent by weight and (b) acetylene black in an amount of from 80 to 50 percent by weight based on the weight of the carbon black, and (4) a catalyst capable of promoting the addition of silicon-bonded hydrogen to silicon-bonded aliphatically unsaturated groups.

The one-component electrically conductive composition is prepared by (A) heating a mixture containing (1) an organopolysiloxane having aliphatic unsaturation, and/or (3) from 40 to 65 percent by weight based on the weight of the organopolysiloxane (1) of an electrically conductive carbon black consisting of a mixture of (a) from 20 to 50 percent by weight of furnace black having a surface area of from 40 to 1500 $m^2/g$ and (b) from 80 to 50 percent by weight of acetylene black, based on the weight of the mixture of carbon black, and (4) a catalyst capable of promoting the addition of silicon-bonded hydrogen atoms to silicon-bonded aliphatically unsaturated groups, to an elevated temperature

and thereafter (b) adding (2) an organosilicon compound having silicon-bonded hydrogen atoms to the mixture after it has cooled to ambient temperature. The resultant composition which can be stored at room temperature without crosslinking, can be crosslinked by heating to an elevated temperature to form an elastomer having an electrical resistivity of less than 2 ohm-cm.

Detailed description of the invention

The organopolysiloxanes (1) used in the electrically conductive compositions of this invention may be any diorganopolysiloxane which could have been used heretofore in diorganopolysiloxane-based compositions containing electrically conductive carbon black which could be cross-linked to form electrically conductive organopolysiloxane elastomers by the addition of silicon-bonded hydrogen to silicon-bonded aliphatic multiple bonds or through ionization radiation. Diorganopolysiloxanes which may be used are especially those of the general formula:

$$R_3SiO(SiR_2O)_nSiR_3$$

wherein R represents the same or different monovalent or substituted monovalent hydrocarbon radicals having up to 18 carbon atoms, in which an average of at least two aliphatically unsaturated groups are present per molecule and n is an integer having a value of at least 10.

Although this is generally not shown in the formula illustrated above, the siloxane chain of the aforementioned diorganopolysiloxanes may contain siloxane units in addition to the diorganosiloxane units ($SiR_2O$). Examples of such other siloxane units, which are generally present only as impurities, are those corresponding to the formulas $RSiO_{3/2}$, $R_3SiO_{1/2}$ and $SiO_{4/2}$, where R is the same as above. It is, however, preferred that such other siloxane units be present in an amount less than 1 mole percent. Still other siloxane units, for example, those of the formula

$$—SiR_2R'SiR_2O—,$$

where R is the same as above and R' is a bivalent hydrocarbon radical, for example, a phenyl radical, may be present in larger amounts.

It is preferred that the substituted hydrcarbon radicals represented by R contain from 1 to 8 carbon atoms.

Examples of hydrocarbon radicals represented by R are alkyl radicals, for example, the methyl and ethyl radical, as well as propyl, butyl, hexyl and octadecyl radicals; alkenyl radicals such as the vinyl, allyl, ethylallyl and butadienyl radicals; aryl radicals such as the phenyl radical; alkaryl radicals such as the tolyl radicals; and aralkyl radicals such as the beta-phenylethyl radical.

Examples of substituted monovalent hydrocarbon radicals represented by R are halogenated hydrocarbon radicals, such as the 3,3,3-trifluoropropyl radical, chlorophenyl and bromotolyl radicals; and cyanoalkyl radicals, such as the beta-cyanoethyl radical.

Because of their availability, it is preferred that at least 80 percent of the R radicals be methyl radicals.

Preferred diorganopolysiloxanes are those having trimethylsiloxy or vinyldimethylsiloxy groups as terminal units and contain from 0.01 to 5 mole percent of methylvinylsiloxane units. More preferably the diorganopolysiloxanes are those containing from 0.1 to 2 mole percent of methylvinylsiloxane units and the remaining diorganosiloxane units are dimethylsiloxane units.

When the compositions are to be cross-linked by the addition of silicon-bonded hydrogen to a silicon-bonded aliphatic multiple bond, it is essential that the diorganopolysiloxane which constitutes the base of the composition have at least two alkenyl radicals for each molecule of diorganopolysiloxane.

The viscosity of the diorganopolysiloxane used in the preparation of the compositions of this invention is preferably 100 mPa.s at 25°C and more preferably at least $10^5$ mPa.s at 25°C.

When the compositions are to be cross-linked by the addition of silicon-bonded hydrogen to a silicon-bonded aliphatic multiple bond, then the composition must contain in addition to the electrically conductive carbon black and the diorganopolysiloxane containing alkenyl radicals, at least one organosilicon compound having at least 3 silicon-bonded hydrogen atoms per molecule and a catalyst which promotes the addition of silicon-bonded hydrogen to the silicon-bonded aliphatic multiple bonds.

The organosilicon compounds containing at least 3 silicon-bonded hydrogen atoms per molecule are generally organopolysiloxanes, especially methylhydrogenpolysiloxanes.

The organosilicon compounds may contain units represented by the formula

$$R^1_a\,SiO_{\frac{4-a}{2}}$$

where $R^1$ represents hydrogen or is the same as R, in which at least 2 and preferably 3 silicon-bonded hydrogen atoms are present per molecule and a is 1, 2 or 3. Preferred compounds are those having RHSiO-units, $R_2SiO$- and $R_3SiO_{1/2}$-units in which a silicon-bonded hydrogen atom is present for each 3 to 100 silicon atoms in the compounds and have a viscosity of from 10 to 50,000 mPa.s at 25°C.

The organosilicon compounds having at least 3 silicon-bonded hydrogen atoms per molecule are preferably used in an amount of from 0.5 to 20 percent by weight, based on the weight of the diorganopolysiloxane containing alkenyl radicals.

Examples of catalysts which promote the addition of silicon-bonded hydrogen to aliphatic multiple bonds are metallic and finely dispersed platinum, ruthenium, rhodium, palladium and iridium. These metals may be dispersed on

carriers, such as the carbon black used in accordance with this invention, silicon dioxide, aluminum oxide or activated carbon. Furthermore, it is possible to use compounds or complexes of these metals, such as $PtCl_4$, $H_2PtCl_6.6H_2O$, $Na_2PtCl_4.4H_2O$, platinum-olefin complexes, platinum-alcohol complexes, platinum-alcoholate complexes, platinum-ether complexes, platinum-aldehyde complexes, platinum-ketone complexes, ammonium platinum complexes, platinum-vinyl-siloxane complexes, especially platinum-divinyltetramethyldisiloxane complexes with or without any detectable, inorganically bonded halogen, trimethylenedipyridine platinum dichloride; as well as iron, nickel and cobalt carbonyls.

When one of the above metals, compounds and/or complexes of said metals is used as a catalyst to promote the addition of silicon-bonded hydrogen to aliphatic multiple bonds, then such catalysts are preferably used in an amount of from 0.5 to 500 ppm (parts per million by weight), calculated as the metallic elements and based on the weight of the diorganopolysiloxane containing alkenyl radicals.

It is preferred that the electrically conductive compositions of this invention contain a total of from 40 to 65 percent by weight of carbon black and more preferably from about 44 to about 61 percent by weight of carbon black based on the weight of the organopolysiloxane (1). Preferably the carbon black consists of two types; one type consisting of a furnace type carbon black which is present in an amount of from 20 to 50 percent based on the weight of the carbon black and having a surface area of from about 40 to about 1500 $m^2/g$ and the other being an acetylene black which is present in an amount of from 80 to 50 percent by weight based on the weight of the carbon black and having a surface area of, for example, from 40 to 1000 $m^2/g$. Preferably, the amount of furnace black will range from about 20 to 45 percent by weight, based on the weight of the carbon black, and will have a surface area of from about 500 to 1200 $m^2/g$. The amount of acetylene black present in the composition will preferably range from about 80 to about 55 percent by weight based on the weight of the carbon black and will preferably have a surface area of from 50 to 800 $m^2/g$.

The surface areas described herein are determined by means of nitrogen absorption according to the ASTM Special Technical Bulletin No. 51, 1941, page 95. (Generally described as the "Bet" Method.)

The term "furnace black" is also described in the German Chemical Literature (cf. "Ullmanns Encyklopadie der technischen Chemie", Volume 14, Munich-Berlin, 1963, page 799).

When the surface area of the furnace black is less than 40 $m^2/g$, then the compositions produce elastomers whose electrical resistivity is greater than 2 ohm-cm. On the other hand, if the surface area of the furnace black is in excess of 1500 $m^2/g$, then the resultant compositions become difficult to process. A commercial form of a furnace type carbon black is Ketjenblack™ EC.

The surface area of the acetylene black is not critical and may range from about 40 to 1000 $m^2/g$, and more preferably from about 45 to 800 $m^2/g$. A commercial form of this type of carbon black is Shawinigan® acetylene black.

It is, however, essential that the mixture of carbon black used in the compositions of this invention have a broad range of surface area, i.e., when a furnace black having a surface area of from 1000 to 1500 $m^2/g$ is used, then it is preferred that the surface area of the acetylene black be less than 1000 $m^2/g$.

When the compositions, which are to be cross-linked, contain less than about 40 percent by weight, based on the weight of the organopolysiloxane, of carbon black, then the compositions form elastomers having an electrical resistance above 2 ohm-cm. On the other hand, if the compositions, which are to be cross-linked, contain more than of about 65 percent by weight of carbon black, based on the weight of the organopolysiloxane (1), then the resultant compositions are difficult to process and form materials having unsatisfactory elastomeric properties.

Likewise, it has been found that when furnace black or acetylene black is used alone in the compositions of this invention, that elastomers having desirable physical properties and an electrical resistivity of less than 2 ohm-cm cannot be obtained. However, surprisingly it was found that when a mixture of carbon black is incorporated in the organopolysiloxane compositions of this invention, the compositions can be easily processed and form elastomers which have an electrical resistivity of less than 2 ohm-cm and also have desirable physical properties.

In addition to the diorganopolysiloxane which constitutes the base of these compositions, the electrically conductive carbon black, the organosilicon compound containing at least 3 silicon-bonded hydrogen atoms per molecule, and a catalyst which promotes the addition of silicon-bonded hydrogen to silicon-bonded aliphatically unsaturated groups, the compositions of this invention may contain additional substances such as could have been used heretofore in the preparation of diorganopolysiloxane-based compositions containing electrically conductive carbon black, for the preparation of electrically conductive organopolysiloxane elastomers by the addition of silicon-bonded hydrogen to aliphatic multiple bonds or by ionization radiation. Additional substances which may be added to these compositions are reinforcing and non-reinforcing fillers other than furnace black and acetylene black, stabilizers, antioxidants, processing aids such as organopolysiloxanes containing silicon-bonded hydroxyl groups and having a maximum of 100 silicon atoms per molecule, and plasticizers, as well as substances which may improve other properties of the elastomers other than electrical conductivity.

Examples of plasticizers are especially trimethylsiloxy end-blocked dimethylpolysiloxanes having a maximum of 1000 silicon atoms per molecule.

Examples of fillers other than furnace black and acetylene black which may be incorporated in the compositions of this invention are pyrogenically produced silicon dioxide, silicic acid hydrogel which has been dehydrated while maintaining its structure, silicic acid xerogels, pyrogenically produced aluminum oxide and pyrogenically produced titanium dioxide.

Examples of non-reinforcing fillers which may be used are quartz meal and diatomaceous earth.

The compositions of this invention may also contain fibrous fillers, such as glass fibers having an average length up to about 0.5 mm, and/or asbestos fibers.

All of the previously cited fillers, including the various types of carbon black, or a portion of said fillers may have organopolysiloxane groups in their surfaces. This can, for example, be achieved by treating a portion of the fillers with hexamethyldisilazane either before or after they have been mixed with the diorganopolysiloxanes which form the base of these compositions.

Adhesive promoters, such as glycidyloxypropyltrialkoxysilane, may be used to improve the adhesion of the elastomers to the surfaces.

The electrically conductive organopolysiloxane compositions may be prepared by heating a mixture containg (1) an organopolysiloxane having silicon-bonded aliphatic unsaturation and/or (3) from 40 to 65 percent by weight based on the weight of the organopolysiloxane (1) of an electrically conductive carbon black containing (a) from 20 to 50 percent by weight of furnace black, having a surface area of from 40 to 1500 $m^2/g$ and (b) from 80 to 50 percent by weight of acetylene black based on the total weight of the carbon black and (4) a catalyst which is capable of promoting the addition of silicon-bonded hydrogen to silicon-bonded aliphatically unsaturated groups, to an elevated temperature and thereafter adding (3) an organo-silicon compound containing silicon-bonded hydrogen atoms to the resultant mixture after it has cooled to form a one-component composition capable of being crosslinked to an elevated temperature to form an electrically conductive elastomer.

In addition, the electrically conductive organopolysiloxane compositions may be prepared by heating a mixture containing (1) an organopolysiloxane having silicon-bonded aliphatic unsaturation and (4) a catalyst which is capable of promoting the addition of silicon-bonded hydrogen to silicon-bonded aliphatically unsaturated groups to an elevated temperature and thereafter adding (2) an organosilicon compound containing silicon-bonded hydrogen atoms and (3) from 40 to 65 percent by weight based on the weight of the organopolysiloxane (1) of an electrically conductive carbon black containing (a) from 20 to 50 percent by weight of furnace black, having a surface area of from 40 to 1500 $m^2/g$ and (b) from 80 to 50 percent by weight of acetylene black based on the weight of the organopolysiloxane (1) to the resultant mixture after it has cooled to form a one-component composition capable of being crosslinked at an elevated temperature to form an electrically conductive elastomer.

Also, the electrically conductive organopolysiloxane compositions may be prepared by heating a mixture containing carbon black (3) and catalyst (4) to an elevated temperature and thereafter adding organopolysiloxane (1) and organosilicon compound (2) to the resultant mixture after it has cooled to form a one-component composition capable of being crosslinked at an elevated temperature.

In preparing the one-component compositions of this invention, it is preferred that the mixture containing the organopolysiloxane (1) and/or carbon black (3) and catalyst (4) be heated to a temperature of from about 100° up to about 300°C and more preferably from about 150° to about 250°C for at least 5 minutes and more preferably from about 30 minutes up to about 2 hours. Obviously, the higher the temperature, the shorter the heating time. It is preferred that the compositions be heated in the presence of an inert atmosphere such as nitrogen at atmospheric pressures. Higher or lower pressures may be employed if desired.

The resultant compositions are cooled and then mixed with the organosilicon compound (2). The compositions may be stored at ambient temperature until they are ready to use.

One advantage of the compositions of this invention over those known heretofore is that the compositions containing the organopolysiloxane (1), and/or carbon black (3), and catalyst (4) may be cooled and mixed immediately with the organosilicon compound (2) and stored without any apparent evidence of crosslinking.

In preparing these compositions, it is not essential that all the organopolysiloxane (1) and/or carbon black (3) be mixed with the catalyst (4) and heated. It is, however, preferred that at least one-half of the carbon black (3) and/or the organopolysiloxane (1) be mixed with catalyst (4) and heated and then the remainder of the organopolysiloxane (1) and/or carbon black (3) may be added to the heated mixture along with the organosilicon compound (2). Likewise, a portion of the catalyst (4) may be added to the organopolysiloxane (1) and the remainder may be admixed with the organosilicon compound (2) or added prior to, simultaneously with, or after the addition of the organosilicon compound (2).

These compositions may be crosslinked by heating them to a temperature of from about 100°C to about 400°C, and more preferably to a temperature of from about 175° to 250°C. Crosslinking may also be achieved by other sources. Examples of other sources are ultraviolet, X-ray, microwave energy, alpha, beta and/or gamma radiation. When the compositions are to be

cross-linked exclusively by radiation, a dose of from 5 to 8 megarad is preferred.

Since the cross-linked electrically conductive elastomers of this invention have an electrical resistance of less than about 2 ohm-cm, they are especially useful in the preparation of electrically conductive applications, such as plates, coatings, bands, films, etc. Also, they may be used as cores for ignition cables, as gaskets for microwave ovens and in computer devices.

The following examples are for purposes of illustration and are not to be construed as being limited to the following embodiments. In these examples all parts are by weight unless otherwise specified.

Preparation of platinum catalyst

The platinum catalyst used in the following examples was prepared in the following manner:

An aminofunctional silicon composition is prepared by heating a mixture containing about 266.4 parts of octamethylcyclotetrasiloxane, 22.4 parts of β-(aminoethyl)-γ-aminopropyl-trimethoxysilane and 0.29 parts of potassium hydroxide to a temperature of 145°C for three hours. After cooling the liquid product to room temperature, 0.29 part of acetic acid is added to neutralize the potassium hydroxide. The product is filtered and a liquid product having a viscosity of about 40 mPa.s at 25°C is recovered.

About 28.8 parts of the aminofunctional silicon composition prepared above is added to a reactor under an atmosphere of nitrogen. About 100 parts of isopropanol, 1.04 parts of chloroplatinic acid hexahydrate, and 45 parts of toluene are added to the reactor and the reaction mixture is stirred for 30 minutes at 27°C. The resultant transparent orange colored product which contains 0.16 weight percent of platinum is identified as being an ammonium platinum complex.

Example 1

About 100 parts of a trimethylsiloxy endblocked diorganopolysiloxane which consists of 99.86 mole percent of dimethylsiloxane units and 0.14 mole percent of methylvinylsiloxane units and having a plasticity value of about 105 are mixed with 45 parts of acetylene black having a surface area of about 65 $m^2/g$, an average particle size of 420+25 millimicrons and a nigrometer value of 93 (available as Shawinigan® black from Shawinigan Product Corporation), 12 parts of furnace black having a surface area of 1000 $m^2/g$, a particle size of about 30 millimicrons (available from Armak Company as Ketjenblack™ EC), and 2.5 parts of the platinum catalyst prepared above and heated for 1 hour at 183°C in the presence of nitrogen and then cooled to room temperature. To the resultant mixture are added 2.4 parts of furnace black (Ketjenblack™ EC), 0.8 parts of the platinum catalyst and 1.6 parts of methylhydrogenpolysiloxane having a silicon to hydrogen ratio of 1:1 and a viscosity of 5.0 mPa.s at 25°C. The mixture is then stored at room temperature for 2 months. The plasticity values are shown in Table I. After 3 months storage a sample of the mixture is extruded to form a film, which is press-cured at about 175°C for 10 minutes and then post-cured at 204°C for about 4 hours. The electrical resistivity is shown in Table II.

TABLE I

| Storage time | Plasticity |
|---|---|
| 1 hour | 1075 |
| 1 day | 1164 |
| 5 days | 1226 |
| 7 days | 1238 |
| 14 days | 1225 |
| 21 days | 1236 |
| 1 month | 1248 |
| 2 months | 1348 |

TABLE II

| Cure conditions | Electrical resistivity |
|---|---|
| 10 min/175°C | 1.5 ohm-cm |
| 4 hr/204°C | 1.4 ohm-cm |

Example 2

The procedure of Example 1 is repeated except that 13 parts of furnace black (Ketjenblack™ EC) are added to the composition. The electrical resistivity is shown below.

| Cure conditions | Electrical resistivity |
|---|---|
| 10 min/175°C | 1.6 ohm-cm |
| 4 hr/204°C | 1.4 ohm-cm |

Example 3

The procedure of Example 1 is repeated except that 43 parts of the acetylene black (available as Shawinigan® black) and 12 parts of furnace black (available as Ketjenblack ™ EC) are substituted for 45 parts of acetylene black and 14.4 parts of furnace black. The electrical resistance is shown below:

| Cure conditions | Electrical resistivity |
|---|---|
| 10 min/175°C | 1.9 ohm-cm |
| 4 hr/204°C | 1.7 ohm-cm |

Example 4

The procedure of Example 3 is repeated except that 12.6 parts of furnace black (available as Ketjenblack™ EC) are substituted for the 12 parts

of furnace black. The electrical resistance is shown below:

| Cure conditions | Electrical resistivity |
|---|---|
| 10 min/175°C | 1.8 ohm-cm |
| 4 hr/204°C | 1.5 ohm-cm |

Example 5

The procedure of Example 1 is repeated except a solution of chloroplatinic acid in isopropanol in an amount such that 15 ppm of platinum are substituted for the platinum catalyst whose preparation is described above.

The resultant composition shows no apparent cross-linking after being stored for 3 months. It is then extruded and press-cured for 10 minutes at 175°C and then post-cured at 204°C. The resultant elastomer has an electrical resistance of less than 2 ohm-cm.

Example 6

The procedure of Example 5 is repeated except that 15 ppm of a platinum-ketone complex solution are substituted for the chloroplatinic acid.

The platinum-ketone complex is prepared by adding one part of chloroplatinic acid ($H_2PtCl_6.6H_2O$) to 200 parts of cyclohexanone which has been heated to 80°C. The solution is maintained at 80°C for 45 minutes and then dried over anhydrous sodium sulfate.

The resultant composition is stored for 2 months, then extruded, press-cured and post-cured. It form an elastomer having an electrical resistivity of less than 2 ohm-cm.

Example 7

The procedure of Example 1 is repeated except that 45 parts of acetylene black having a surface area of about 65 $m^2/g$, 12 parts of furnace black having a surface area of 1000 $m^2/g$ are combined with 2.5 parts of the ammonium platinum complex and heated for 1 hour at 183°C in the presence of nitrogen and then cooled to room temperature. To the resultant mixture are added 100 parts of a trimethylsiloxy endblocked diorganopolysiloxane having 99.86 mole percent of dimethylsiloxane units and 0.14 mole percent of methylvinylsiloxane units and a Williams plasticity value of about 105, 2.4 parts of furnace black (Ketjenblack™ EC), 0.8 parts of the ammonium platinum complex and 1.6 parts of methylhydrogen polysiloxane having a silicon to hydrogen ratio of 1:1 and a viscosity of 5.0 mPa.s at 25°C. The plasticity value of the resultant composition is substantially unchanged after storing for 2 months at room temperature.

Example 8

About 100 parts of a trimethylsiloxy endblocked diorganopolysiloxane which consists of 99.86 mole percent of dimethylsiloxane units and 0.14 mole percent of methylvinylsiloxane units and having a Williams plasticity value of about 105 are mixed with a solution of chloroplatinic acid in isopropanol in an amount such that 15 ppm platinum is present and heated for 1 hour at 183°C in the presence of nitrogen and then cooled to room temperature. To the resultant mixture are added 45 parts of acetylene black having a surface area of about 65 $m^2/g$, an average particle size of 420+25 millimicrons and a nigrometer value of 93 (available as Shawinigan® black from Shawinigan Product Corporation), 15 parts of furnace black having a surface area of 1000 $m^2/g$, a particle size of about 30 millimicrons (available from Armak Company as Ketjenblack™ EC), and 1.6 parts of methylhydrogenpolysiloxane having a silicon to hydrogen ratio of 1:1 and a viscosity of 5.0 mPa.s at 25°C. The mixture is then stored at room temperature for 2 months. The plasticity value of the resultant composition is substantially unchanged after storing for 2 months at room temperature.

Comparison Example $V_1$

About 100 parts of trimethylsiloxy endblocked diorganopolysiloxane which consists of 99.86 mole percent of dimethylsiloxane units and 0.14 mole percent of methylvinylsiloxane units and having a plasticity value of about 105 are mixed with 2.5 parts of the ammonium platinum complex prepared above and 31 parts of pyrogenically prepared silicon dioxide having a surface area of 200 $m^2/g$ and heated for 1 hour at 183°C in the presence of nitrogen. The mixture is cooled to room temperature and mixed with 0.5 parts of the ammonium platinum complex and 1 part of methylhydrogen polysiloxane having a silicon to hydrogen ratio of 1:1 and a viscosity of 5 mPa.s at 25°C.

A sample of the mixture is immediately extruded to form a film which is first heated for 10 minutes at 175°C and then at 204°C for about 4 hours. The electrical resistivity is shown in the following table.

| Cure conditions | Electrical resistivity |
|---|---|
| 10 min/175°C | $1.4 \times 10^{15}$ ohm-cm |
| 4 hr/205°C | $5.2 \times 10^{15}$ ohm-cm |

Comparison Example $V_2$

The procedure of Example $V_1$ is repeated except that 25 parts of furnace black (available as Ketjenblack™ EC) are substituted for the silicon dioxide. The electrical resistivity is shown below:

| Cure conditions | Electrical resistivity |
|---|---|
| 10 min/175°C | 11.7 ohm-cm |
| 4 hr/204°C | 3.7 ohm-cm |

Comparison Example $V_3$

The procedure of Example $V_1$ is repeated except

that 55 parts of acetylene black having a surface area of about 65 $m^2/g$ (available from Shawinigan Products Corporation) are substituted for the silicon dioxide. The electrical resistivity is shown below:

| Cure conditions | Electrical resistivity |
|---|---|
| 10 min/175°C | 7.8 ohm-cm |
| 4 hr/204°C | 3.9 ohm-cm |

Comparison Example $V_4$

About 100 parts of a trimethylsiloxy endblocked diorganopolysiloxane which consists of 99.86 mole percent of dimethylsiloxane units and having a plasticity value of about 105 are mixed with 45 parts of acetylene black having a surface area of about 65 $m^2/g$, an average particle size of 420+25 millimicrons and a nigrometer value of 93 (available as Shawinigan® black from Shawinigan Product Corporation), 105 parts of furnace black having a surface area of 1000 $m^2/g$, a particle size of about 30 millimicrons (available from Armak Company as Ketjenblack™ EC), 2.5 parts of the ammonium platinum complex prepared above, and 1.6 parts of methylhydrogenpolysiloxane having a silicon to hydrogen ratio of 1:1 and a viscosity of 5.0 mPa.s at 25°C. The mixture cures within 10 minutes to a solid mass.

## Claims

1. A one-component composition which is curable to an elastomer having an electrical resistivity of less then 2 ohm-cm based on organopolysiloxanes, crosslinking agents, carbon black and catalysts, characterized in that said composition comprises (1) an organopolysiloxane having silicon-bonded aliphatic unsaturation, (2) an organosilicon compound having silicon-bonded hydrogen atoms, (3) from 40 to 65 percent by weight of carbon black based on the weight of the organopolysiloxane (1) in which the carbon black consists of a mixture containing (a) from 20 to 50 percent by weight of furnace black and (b) from 80 to 50 percent by weight of acetylene black based on the total weight of the carbon black and (4) a catalyst capable of promoting the addition of the silicon-bonded hydrogen to the silicon-bonded aliphatically unsaturated groups.

2. The composition of claim 1, characterized in that the acetylene black has a surface area of from 40 to 1000 $m^2/g$ and the furnace black has a surface area of from 40 to 1500 $m^2/g$.

3. The composition of claim 1, characterized in that the organopolysiloxane (1) is represented by the formula

$$R_3SiO(SiR_2O)_nSiR_3$$

where R is selected from the group consisting of monovalent hydrocarbon radicals and substituted monovalent hydrocarbon radicals having up to 18 carbon atoms in which an average of at least two R groups per molecule contain aliphatically unsaturated groups and n has a value of at least 10.

4. A method of preparing the one-component composition of claim 1 characterized in (A) heating a mixture containing (1) an organopolysiloxane having silicon-bonded aliphatically unsaturated groups, and (4) a catalyst which is capable of promoting the addition of silicon-bonded hydrogen to silicon-bonded aliphatically unsaturated groups, to an elevated temperature, (B) cooling the resultant mixture and thereafter (C) adding (3) from 40 to 65 percent by weight of a mixture of carbon black based on the weight of the organopolysiloxane (1), in which the carbon black mixture contains from 20 to 50 percent by weight of furnace black and from 80 to 50 percent by weight acetylene black based on the weight of the carbon black mixture, and (2) an organosilicon compound having at least 3 silicon-bonded hydrogen atoms per molecule.

5. The method of claim 4, characterized in that a mixture containing organopolysiloxane (1), carbon black (3) and catalyst (4) is heated to an elevated temperature, cooled and then mixed with organosilicon compound (2).

6. The method of claim 4, characterized in that a mixture containing carbon black (3) and catalyst (4) is heated to an elevated temperature, cooled and then mixed with organopolysiloxane (1) and organosilicon compound (2).

7. The method of claim 4, characterized in that a portion of the organopolysiloxane (1) is heated with the catalyst (4) and thereafter the remainder of the organopolysiloxane (1), organosilicon compound (2) and carbon black (3) are added to the heated mixture after cooling.

8. The method of claim 4, characterized in that the organopolysiloxane (1) contains at least two silicon-bonded aliphatically unsaturated groups per molecule.

9. The method of claim 4, characterized in that the organopolysiloxane (1), carbon black (3) and catalyst (4) are heated to a temperature of at least 100°C.

10. Employment of the one-component composition which has been prepared to any of the proceeding methods for curing to an elastomer having an electrical resistivity of less than 2 ohm-cm by heating said composition to a temperature of at least 100°C to promote cross-linking.

## Patentansprüche

1. Einkomponentenzusammensetzung auf der Grundlage von Organopolysiloxanen, Vernetzungsmitteln, Ruß und Katalysatoren, die zu einem Elastomer mit einem spezifischen elektrischen Widerstand von weniger als 2 Ohm-cm ausgehärtet werden kann, dadurch gekennzeichnet, daß die Masse

(1) ein Organopolysiloxan mit einer an Silicium gebundenen aliphatischen Unsättigung,

(2) eine siliciumorganische Verbindung mit an Silicium gebundenen Wasserstoffatomen,

(3) 40 bis 65 Gew.-% Ruß, bezogen auf das Gewicht des Organopolysiloxans (1), wobei der Ruß aus einer Mischung besteht, die (a) 20 bis 50 Gew.-% Furnace-Ruß und (b) 80 bis 50 Gew.-% Acetylenruß, auf das Gesamtgewicht des Rußes bezogen, enthält, und

(4) einen Katalysator, der die Addition der an Silicium gebunden Wasserstoffatome an die an Silicium gebundenen, aliphatisch ungesättigten Gruppen fördert, enthält.

2. Zusammensetzung nach Anspruch 1, dadurch gekennzeichnet, daß der Acetylenruß eine spezifische Oberfläche von 40 bis 1000 $m^2/g$ und der Furnace-Ruß eine spezifische Oberfläche von 40 bis 1500 $m^2/g$ aufweisen.

3. Zusammensetzung nach Anspruch 1, dadurch gekennzeichnet, daß das Organopolysiloxan (1) der Formel

$$R_3SiO(SiR_2O)_nSiR_3$$

entspricht, in der R aus der Gruppe ausgewählt ist, die einwertige Kohlenwasserstoffgruppen und substituierte einwertige Kohlenwasserstoffgruppen mit bis zu 18 Kohlenstoffatomen umfaßt, wobei im Durchschnitt mindestens zwei Gruppen R pro Molekül aliphatisch ungesättigte Gruppen enthalten, und n einen Wert von mindestens 10 besitzt.

4. Verfahren zur Herstellung der Einkomponentenzusammensetzung nach Anspruch 1, dadurch gekennzeichnet, daß man (A) eine Mischung, die (1) ein Organopolysiloxan mit an Silicium gebundenen aliphatisch ungesättigten Gruppen und (4) einen Katalysator, der die Addition der an Silicium gebundenen Wasserstoffatome an die an Silicium gebundenen, aliphatisch ungesättigten Gruppen fördert, enthält, auf eine erhöhte Temperatur erhitzt, (B) die erhaltene Mischung abkühlt und anschließend (C) (3) 40 bis 65 Gew.-% einer Rußmischung, bezogen auf das Gewicht des Organopolysiloxans (1) zugibt, welche Rußmischung 20 bis 50 Gew.-% Furnace-Ruß und 80 bis 50 Gew.-% Acetylenruß, bezogen auf das Gewicht der Rußmischung, enthält, und (2) eine siliciumorganische Verbindung, die mindestens drei an Silicium gebundene Wasserstoffatome pro Molekül aufweist, zusetzt.

5. Verfahren nach Anspruch 4, dadurch gekennzeichnet, daß die das Organopolysiloxan (1), den Ruß (3) und den Katalysator (4) enthaltende Mischung auf eine erhöhte Temperatur erhitzt, abgekühlt und dann mit der siliciumorganischen Verbindung (2) vermischt wird.

6. Verfahren nach Anspruch 4, dadurch gekennzeichnet, daß eine Mischung, die den Ruß (3) und den Katalysator (4) enthält, auf eine erhöhte Temperatur erhitzt, abgekühlt und dann mit dem Organopolysiloxan (1) und der siliciumorganischen Verbindung (2) vermischt wird.

7. Verfahren nach Anspruch 4, dadurch gekennzeichnet, daß ein Teil des Organopolysiloxans (1) mit dem Katalysator (4) erhitzt und anschließend der Rest des Organopolysiloxans (1) der siliciumorganischen Verbindung (2) und des Rußes (3) zu der erhitzten Mischung nach deren Abkühlung zugegeben werden.

8. Verfahren nach Anspruch 4, dadurch gekennzeichnet, daß das Organopolysiloxan (1) mindestens zwei an Silicium gebundene aliphatisch ungesättigte Gruppen pro Molekül aufweist.

9. Verfahren nach Anspruch 4, dadurch gekennzeichnet, daß das Organopolysiloxan (1), der Ruß (3) und der Katalysator (4) auf eine Temperatur von mindestens 100°C erhitzt werden.

10. Verwendung der nach einem Verfahren der vorhergehenden Ansprüche hergestellten Einkomponentenzusammensetzung zur Härtung unter Bildung eines Elastomers mit einem spezifischen elektrischen Widerstand von weniger als 2 Ohm-cm durch Erhitzen der Zusammensetzung auf eine Temperatur von mindestens 100°C zur Förderung der Vernetzung.

**Revendications**

1. Composition à unseul composant à base de polyorganosiloxanes, de réticulants, de noir de carbone et de catalyseurs, capable de durcir en donnant un élastomère dont la résistivité est inférieure à 2 ohm-cm, composition caractérisé en ce qu'elle comprend:

(1) un polyorganosiloxane contenant une insaturation aliphatique liée au silicium,

(2) un composé organosilicique contenant des atomes d'hydrogène liés au silicium,

(3) de 40 à 65% en poids, par rapport au poids du polyorganosiloxane (1), de noir de carbone constitué d'un mélange contenant (a) de 20 à 50% en poids de noir de four et (b) de 80 à 50% en poids de noir d'acétylène par rapport au poids total du noir de carbone, et

(4) un catalyseur apte à accélérer la fixation de l'hydrogène lié au silicium sur les radicaux insaturés aliphatiques liés au silicium.

2. Composition selon la revendication 1 caractérisée en ce que le noir d'acétylène a une surface spécifique de 40 à 1000 $m^2/g$, et le noir de four une surface spécifique de 40 à 1500 $m^2/g$.

3. Composition selon la revendication 1 caractérisée en ce que le polyorganosiloxane (1) répond à la formule suivante:

$$R_3SiO(SiR_2O)_nSiR_3$$

dans laquelle R représente un radical pris dans l'ensemble constitué par les radicaux hydrocarbonés monovalents et les radicaux hydrocarbonés monovalents substitués contenant au plus 18 atomes de carbone, au moins deux radicaux R, en moyenne, par molécule contenant des radicaux aliphatiques insaturés, et n désigne un nombre au moins égal à 10.

4. Procédé de préparation de la composition à une seul composant spécifié à la revendication 1, procédé caractérisé en ce que (A) on chauffe à température élevée un mélange contenant (1) un polyorganosiloxane renfermant des radicaux aliphatiques insaturés liés au silicium, et (4) un catalyseur capable d'accélérer la fixation d'un hydrogène lié au silicium sur des radicaux aliphatiques insaturés liés au silicium, (b) on refroidit le mélange obtenu, et ensuite (C) on ajoute (3) de 40 à 65% en poids, par rapport au poids du polyorganosiloxane (1), d'un mélange de noirs de carbone contenant de 20 à 50% en poids de noir de four et de 80 à 50% en poids de noir d'acétylène par rapport au poids du mélange de noirs de carbone, et (2) un composé organosilicique contenant, par molécule, au moins trois atomes d'hydrogène liés au silicium.

5. Procédé selon la revendication 4 caractérisé en ce qu'on chauffe à température élevée un mélange contenant le polyorganosiloxane (1) le noir de carbone (3) et le catalyseur (4), on le refroidit, puis on le mélange avec le composé organosilicique (2).

6. Procédé selon la revendication 4, caractérisé en ce qu'on chauffe à température élevée un mélange contenant le noir de carbone (3) et le catalyseur (4), on le refroidit, puis on le mélange avec le polyorganosiloxane (1) et le composé organosilicique (2).

7. Procédé selon la revendication 4 caractérisé en ce qu'on chauffe une partie du polyorganosiloxane (1) avec le catalyseur (4), puis, après refroidissement, on ajoute au mélange qui a été chauffé le reste du polyorganosiloxane (1), le composé organosilicique (2) et le noir de carbone (3).

8. Procédé selon la revendication 4, caractérisé en ce que le polyorganosiloxane (1) contient au moins, par molécule, deux radicaux aliphatiques insaturés liés au silicium.

9. Procédé selon la revendication 4 caractérisé en ce qu'on chauffe à au moins 100°C le polyorganosiloxane (1), le noir de carbone (3) et le catalyseur (4).

10. Application de la composition à un seul composant qui a été préparée selon l'un quelconque des procédés précédents, application selon laquelle on transforme ladite composition, par durcissement, en un élastomère ayant une résistivité inférieure à 2 ohm-cm en chauffant cette composition à une température d'au moins 100°C pour accélérer la réticulation.